# EUROPEAN PATENT APPLICATION

(11) **EP 2 693 380 A1**
(43) Date of publication of application: **05.02.2014**
(21) Application number: 12178602.4
(22) Date of filing: 31.07.2012
(51) Int. Cl.: G06Q 10/10

(54) **Displaying action items based on deadline and importance**

(71) Applicant: BlackBerry Limited, Waterloo, ON N2K 0A7 (CA)
(72) Inventor: Hay, Catharine, Waterloo, Ontario N2L 3W8 (CA); Bocking, Andrew Douglas, Waterloo, Ontario N2L 3W8 (CA)
(74) Representative: Patel, Binesh

(57) **Abstract**

Methods and devices for displaying action items based on date information and importance information are described. In one embodiment, a method implemented by a processor of a personal electronic device is described. The method includes: accessing a plurality of action items, at least a subset of the action items having associated date information and importance information; and
displaying, on a display of the personal electronic device, a graphical representation of the plurality of the action items, the graphical representation including an action item identifier for each of the plurality of action items, at least a subset of the action item identifiers being displayed at positions determined at least in part by the date information and the importance information for the action items associated with the action item identifiers.

## Description

### TECHNICAL FIELD

The present application relates to information managers and, more particularly, to methods and personal electronic devices for displaying a graphical representation of action items.

### BACKGROUND

Personal electronic devices are electronic devices that may be used for managing personal information, such as addresses, personal notes and journal entries, action items (i.e. tasks), reminders, archived email messages, etc.

Personal electronic devices may allow a user to create action items (which are sometimes referred to as tasks). Action items may, for example, be to-do items. That is, an action item may be a record of an action that a user wishes to perform or complete in the future. Action items may be manually input into the personal information manager by a user. For example, a user may use a keyboard to manually compose the action item. Some personal information managers may allow the action item to be associated with a date and a reminder of the task to be generated based on the date.

Action items are sometimes presented in a list (which may be referred to as a to-do list), which may be ordered based on the due date associated with action items or may be ordered based on another criterion, such as the creation date of the action item, or based on an alphabetic order of the action items.

### BRIEF DESCRIPTION OF THE DRAWINGS

Reference will now be made, by way of example, to the accompanying drawings which show example embodiments of the present application, and in which:

FIG. 1 is a block diagram illustrating an example personal electronic device in accordance with example embodiments of the present disclosure;

FIG. 2 illustrates an example graphical representation of action items in accordance with example embodiments of the present disclosure;

FIG. 3 illustrates a further example graphical representation of action items in accordance with example embodiments of the present disclosure;

FIG. 4 illustrates a gesture applied to the example graphical representation of action items of FIG. 2;

FIG. 5 illustrates a further example graphical representation of action items in accordance with example embodiments of the present disclosure;

FIG. 6 illustrates a further example graphical representation of action items in accordance with example embodiments of the present disclosure; and

FIG. 7 illustrates a flowchart of an example method of displaying action items based on deadlines and importance in accordance with example embodiments of the present disclosure.

Like reference numerals are used in the drawings to denote like elements and features.

### DETAILED DESCRIPTION

In one example embodiment, the present application describes a method implemented by a processor of a personal electronic device. The method includes: accessing a plurality of action items, at least a subset of the action items having associated date information and importance information; and displaying, on a display of the personal electronic device, a graphical representation of the plurality of the action items, the graphical representation including an action item identifier for each of the plurality of action items, at least a subset of the action item identifiers being displayed at positions determined at least in part by the date information and the importance information for the action items associated with the action item identifiers.

In another embodiment, the present application describes a personal electronic device including a display and a memory. The personal electronic device also includes a processor coupled with the display and the memory. The processor is configured to: access a plurality of action items, at least a subset of the action items having associated date information and importance information, and display, on the display, a graphical representation of the plurality of the action items, the graphical representation including an action item identifier for each of the plurality of action items, at least a subset of the action item identifiers being displayed at positions determined at least in part by the date information and the importance information for the action items associated with the action item identifiers.

In yet another embodiment, the present application describes a computer readable storage medium that includes computer executable instructions which, when executed, cause a processor to: access a plurality of action items, at least a subset of the action items having associated date information and importance information, and display, on the display, a graphical representation of the plurality of the action items, the graphical representation including an action item identifier for each of the plurality of action items, at least a subset of the action item identifiers being displayed at positions determined at least in part by the date information and the importance information for the action items associated with the action item identifiers

Other example embodiments of the present disclosure will be apparent to those of ordinary skill in the art from a review of the following detailed description in conjunction with the drawings.

Example embodiments of the present disclosure are not limited to any particular operating system, personal electronic device architecture, server architecture or computer programming language.

### Example Personal electronic device

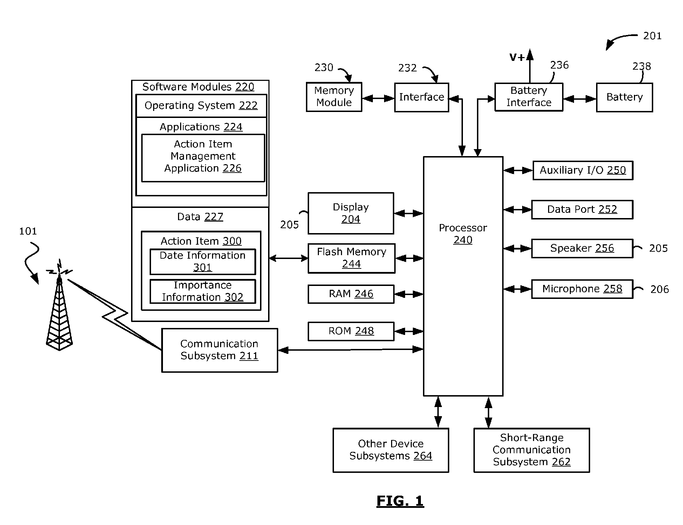

Reference is first made to FIG. 1 which illustrates an example personal electronic device 201. In the illustrated example embodiment, the personal electronic device 201 is a communication device, such as a mobile communication device. In at least some example embodiments, the personal electronic device 201 is a two-way communication device having data and voice communication capabilities, and the capability to communicate with other computer systems, for example, via the Internet. Depending on the functionality provided by the personal electronic device 201, in various example embodiments the personal electronic device 201 may be a multiple-mode communication device configured for data and voice communication, a mobile telephone such as a smartphone, a tablet computer such as a slate computer, an electronic book reader, a wearable computer such as a watch, a PDA (personal digital assistant), or a computer system. The personal electronic device 201 may also be referred to as an electronic device.

A smartphone is a mobile phone which offers more advanced computing capabilities than a basic non-smartphone cellular phone. For example, a smartphone may run third party applications which are stored on the smartphone.

A tablet computer (which may also be referred to as a tablet) is a personal electronic device 201 which is generally larger than a mobile phone (such as a smartphone) or personal digital assistant. Many mobile phones or personal digital assistants are designed to be pocket sized. That is, mobile phones or personal digital assistants are generally small enough to be carried by a person easily, often in a shirt or pant pocket while tablet computers are larger and may not fit within pant pockets. For example, many tablet computers have a height which is seven inches (7") or more. In some example embodiments, the tablet computer may be a slate computer. A slate computer is a tablet computer which does not include a dedicated keyboard. A slate computer may allow for text input through the use of a virtual keyboard or an external keyboard which connects to the slate computer via a wired or wireless connection.

In at least some embodiments, the personal electronic device 201 is a handheld personal electronic device. A handheld personal electronic device is a personal electronic device 201 which is sufficiently small to be held in the hands of a user. The term handheld personal electronic device includes smartphones and may also include tablet computers. In at least some embodiments, the handheld personal electronic device may be sufficiently small to be held in a single hand of a user. For example, the handheld personal electronic device may be a palm-sized device which is sized to be held in the palm of a user's hand. From the description which follows, it will be appreciated that the techniques and methods described herein may be used in personal electronic devices 201 having limited display capabilities.

In other example embodiments, the personal electronic device 201 may be of a type not specifically listed above.

The personal electronic device 201 includes a housing (not shown) which houses components of the personal electronic device 201. The internal components of the personal electronic device 201 are constructed on a printed circuit board (PCB). The personal electronic device 201 includes a controller including at least one processor 240 (such as a microprocessor) which controls the overall operation of the personal electronic device 201. The processor 240 interacts with device subsystems, such as a wireless communication subsystem 211 for exchanging radio frequency signals with a wireless network 101 to perform communication functions. The processor 240 interacts with additional device subsystems including one or more input interfaces 206 (such as a keyboard, one or more control buttons, one or more microphones 258, and/or a touch-sensitive overlay associated with a touchscreen display, etc.), flash memory 244, random access memory (RAM) 246, read only memory (ROM) 248, auxiliary input/output (I/O) subsystems 250, a data port 252 (which may be a serial data port, such as a Universal Serial Bus (USB) data port), one or more output interfaces 205 (such as a display 204, one or more speakers 256, or other output interfaces), a short-range communication subsystem 262, and other device subsystems generally designated as 264. Some of the subsystems shown in FIG. 1 perform communication-related functions, whereas other subsystems may provide "resident" or on-device functions.

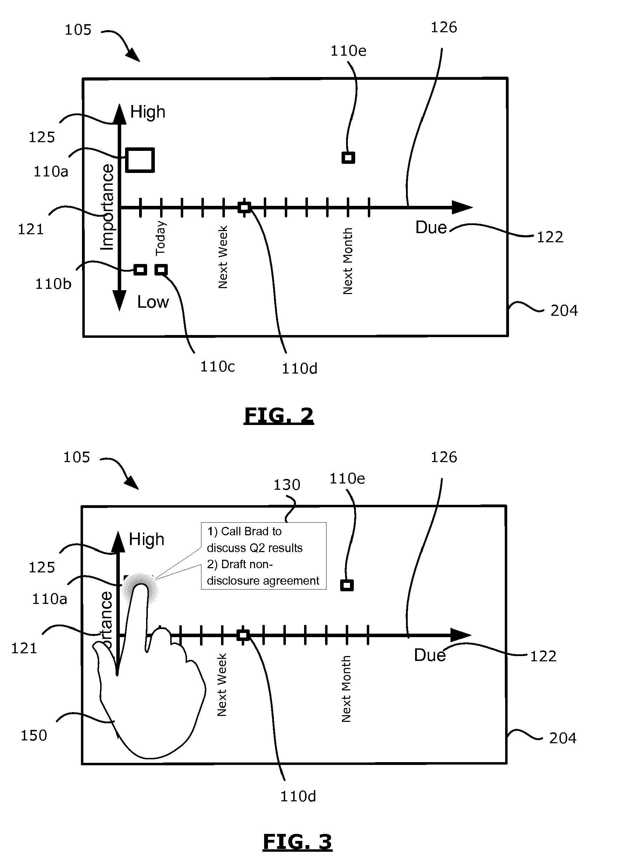

One or more of the input interfaces 206 may be configured for receiving user input to allow a user to interact with the personal electronic device 201. Such input interfaces 206 may, for example, allow a user to interact with a graphical user interface provided on the personal electronic device 201, such as a graphical representation of action items (examples of which will be described below with reference to FIGs. 2 to 6). Instructions, commands, or other forms of input may be received by the personal electronic device 201 via the input interfaces. For example, the input interfaces 206 may allow a user to interact with one or more interface elements displayed on a graphical user interface of the display 204.

Such input interfaces 206 may take a variety of forms. For example, any one or combination of the following input interfaces 206 may be included on the personal electronic device 201 and used for receiving user input: a touchscreen display, a control button, a trackball or trackpad, a keyboard, a camera (which may be used, for example, to detect gesture-based input), an orientation or acceleration sensor such as an accelerometer (which may be used, for example, to detect gesture-based input performed by moving the personal electronic device 201), a microphone 258 (which may be used, for example, to detect voice-based commands). It will be appreciated that the foregoing list of input interfaces 206 is not exhaustive and that other input interfaces 206 may be used instead of or in addition to any of the interfaces 206 described above.

As noted previously, the personal electronic device 201 may include a touch-sensitive display 204 which may be referred to as a touchscreen or a touchscreen display 204. The touchscreen display 204 may be constructed using a touch-sensitive input surface connected to an electronic controller. The touch-sensitive input surface overlays the touchscreen display 204 and may be referred to as a touch-sensitive overlay. The touch-sensitive overlay and the electronic controller provide a touch-sensitive input interface 206 and the processor 240 interacts with the touch-sensitive overlay via the electronic controller. That is, the touchscreen display 204 acts as both an input interface 206 and an output interface 205.

In some embodiments, the personal electronic device 201 may communicate with any one of a plurality of fixed transceiver base stations of the wireless network 101 within its geographic coverage area. The personal electronic device 201 may send and receive communication signals over the wireless network 101 after the required network registration or activation procedures have been completed.

In some example embodiments, the auxiliary input/output (I/O) subsystems 250 may include an external communication link or interface, for example, an Ethernet connection. The personal electronic device 201 may include other wireless communication interfaces for communicating with other types of wireless networks, for example, a wireless network such as an orthogonal frequency division multiplexed (OFDM) network.

In the example embodiment illustrated, the personal electronic device 201 also includes a memory module 230 (which may be flash memory) and a memory module interface 232. The memory module 230 may be removable from the personal electronic device 201. Network access may be associated with a subscriber or user of the personal electronic device 201 via the memory module 230, which may be a Subscriber Identity Module (SIM) card for use in a GSM network or other type of memory module for use in the relevant wireless network. The memory module 230 may be inserted in or connected to the memory module interface 232 of the personal electronic device 201.

The personal electronic device 201 may store data 227 in an erasable persistent memory, which in one example embodiment is the flash memory 244. In various example embodiments, the data 227 may include service data having information required by the personal electronic device 201 to establish and maintain communication with the wireless network 101. The data 227 may also include user application data such as email messages, address book and contact information, calendar and schedule information, notepad documents, image files, and other commonly stored user information stored on the personal electronic device 201 by its user, and other data. The data 227 stored in the persistent memory (e.g. flash memory 244) of the personal electronic device 201 may be organized, at least partially, into a number of databases or data stores each containing data items of the same data type or associated with the same application. For example, email messages, contact records, and action items 300 may be stored in individual databases within the memory of the personal electronic device 201.

The data 227 may include one or more action items 300. An action item 300 represents an action. More specifically, action items 300 represent an action that a user intends to perform in the future. More particularly, an action item 300 represents a concrete, defined and planned action.

Accordingly, an action item 300 may be a record of an action that a user wishes to be reminded of. That is, the action item 300 may be a record of a future action (i.e. an action that a user intends to perform in the future). Thus, the action item 300 serves as a record for a user to remind the user that an action is required. By way of example and not limitation, the action item 300 may remind a user that they intend to send an email, make a phone call, prepare a document or presentation, etc.

An action item 300 may have date information 301 associated with the action item 300. The date information 301 defines a deadline for the action associated with the action item 300 (the term "deadline" may include a time, a date, or both and the deadline may be specified in absolute (e.g. a calendar date and/or a solar time) or relative terms (e.g. due in a week, a month, a year, etc.)). Accordingly, the date information 301 may specify timing information for completing the action associated with the action item 300.

The date information 301 may be used by the personal electronic device 201 for generating reminders. For example, when a deadline for completing an action item 300 has expired or is going to expire soon, then a reminder may be generated to remind a user about the action. The reminder generated by the personal electronic device 201 may be a sensory based reminder, such as an audible reminder (provided on the speaker 256), a visual reminder (provided on the display 204), or a vibratory reminder (provided by a vibrator associated with the personal electronic device 201).

An action item 300 may also include importance information 302. The importance information 302 defines a level of importance of the action associated with the action item 300. The level of importance may be specified in different ways in different embodiments. For example, in one embodiment, the personal electronic device 201 may be configured to allow the level of importance to be specified as a binary property. That is, the level of importance for an action item 300 may be set as one of two possible values - a first representing unimportant actions (i.e. actions with a normal level of importance) and a second representing important actions (i.e. actions with a high level of importance).

In another embodiment, the level of importance is a ternary property. That is, the level of importance may be specified as one of three possible values. A first value represents a low level of importance, a second value represents a neutral or medium level of importance and a third value represents a high level of importance.

In yet other example embodiments, the level of importance may be specified with greater specificity. For example, the level of importance may be specified on a scale of one to ten or one to one hundred. In some embodiments, the level of importance may be specified on a scale of one to five or one to four.

The level of importance may, in at least some embodiments, be user-specified. More particularly, a user may interact with a graphical user interface on the electronic device 201 using an input interface to assign the action item a level of importance. For example, in one embodiment, a user may assign the action item a number of stars or points based on a predefined scale (e.g. 1 to 5). In another embodiment (where the level of importance is a binary property), the user may set an important flag to indicate that the action item is important.

Action items 300 may include other metadata in addition to or instead of the importance information 302 and/or the date information 301. For example, such metadata may specify a time of creation of the action item 300, a contact associated with the action item 300 (such as a person whose presence is necessary or desirable to complete the action), a location associated with the action item 300 (such as a location where the action is to be completed).

A status indicator may also be associated with the action item 300. The status indicator may be a completion indicator or a progress indicator. A completion indicator may be a flag that may be set to indicate whether the action associated with an action item 300 has been completed (i.e. it may be toggled from an "incomplete" state which indicates that the action has not been completed to a "completed" state which indicates that the action has been completed). Accordingly, the completion indicator may have two possible values - complete or incomplete. In contrast, a progress indicator may allow greater precision in describing a status of an action item 300. For example, a progress indicator may specify the degree to which the action has been completed (e.g. it may be specified as a percentage, such as 50%).

Action items 300 may also include a description of the action associated with the action item 300. That is, the action item 300 may describe what needs to be done in order to mark a completion indicator as complete. The description of the action may be a short description. In at least some embodiments, the description of the action may be provided in multiple fields associated with the action item 300. For example, the action item 300 may include a subject field which may include a short description of the action and may also include a main body field which allows the action to be described in greater detail. In at least some embodiments, the subject field may be configured for population with text that is less than a predetermined length (e.g. which is less than a predetermined number of characters), while the main body field is configured so that it may be populated with a greater amount of text than the subject field.

While a single action item 300 is illustrated in FIG. 1, the personal electronic device 201 is configured to manage multiple action items 300. Thus, a plurality of action items 300 may be stored in memory associated with the personal electronic device 201. These action items 300 may be stored in an action item database (not shown).

The action items 300 may be received from a user via an input interface 206 of the personal electronic device 201. For example, in some embodiments, a user may input the action item 300 (including date information 301 and/or importance information 302) using an input interface 206 associated with the personal electronic device 201, such as a touchscreen display. Action items may be received using other techniques in some embodiments. For example, a user may select an email message and may flag the email message to create an action item.

The data port 252 may be used for synchronization with a user's host computer system (not shown). The data port 252 enables a user to set preferences through an external device or software application and extends the capabilities of the personal electronic device 201 by providing for information or software downloads to the personal electronic device 201 other than through the wireless network 101. The alternate download path may, for example, be used to load an encryption key onto the personal electronic device 201 through a direct, reliable and trusted connection to thereby provide secure device communication.

In some example embodiments, the personal electronic device 201 is provided with a service routing application programming interface (API) which provides an application with the ability to route traffic through a serial data (i.e., USB) or Bluetooth® (Bluetooth® is a registered trademark of Bluetooth SIG, Inc.) connection to the host computer system using standard connectivity protocols. When a user connects their personal electronic device 201 to the host computer system via a USB cable or Bluetooth® connection, traffic that was destined for the wireless network 101 is automatically routed to the personal electronic device 201 using the USB cable or Bluetooth® connection. Similarly, any traffic destined for the wireless network 101 is automatically sent over the USB cable Bluetooth® connection to the host computer system for processing.

The personal electronic device 201 includes or is connectable to a power source. In the embodiment illustrated, the power source is a battery 238, such as a rechargeable battery that may be charged, for example, through charging circuitry coupled to a battery interface 236 such as the serial data port 252. The battery 238 provides electrical power to at least some of the electrical circuitry in the personal electronic device 201, and the battery interface 236 provides a mechanical and electrical connection for the battery 238. The battery interface 236 is coupled to a regulator (not shown) which provides power V+ to the circuitry of the personal electronic device 201.

The short-range communication subsystem 262 is an additional optional component which provides for communication between the personal electronic device 201 and different systems or devices, which need not necessarily be similar devices. For example, the short-range communication subsystem 262 may include an infrared device and associated circuits and components, or a wireless bus protocol compliant communication mechanism such as a Bluetooth® communication module to provide for communication with similarly-enabled systems and devices.

A pre-determined set of applications that control basic device operations, including data and possibly voice communication applications may be installed on the personal electronic device 201 during or after manufacture. Additional applications and/or upgrades to an operating system 222 or software applications 224 may also be loaded onto the personal electronic device 201 through the wireless network 101, the auxiliary I/O subsystem 250, the data port 252, the short-range communication subsystem 262, or other suitable device subsystems 264. The downloaded programs or code modules may be permanently installed, for example, written into the program memory (i.e. the flash memory 244), or written into and executed from the RAM 246 for execution by the processor 240 at runtime.

In some example embodiments, the personal electronic device 201 may provide two principal modes of communication: a data communication mode and a voice communication mode. In the data communication mode, a received data signal such as a text message, an email message, or a web page download will be processed by the communication subsystem 211 and input to the processor 240 for further processing. For example, a downloaded web page may be further processed by a browser application or an email message may be processed by the email messaging application and output to the touchscreen display 204. A user of the personal electronic device 201 may also compose data items, such as email messages, for example, using the input interfaces 206, such as the touchscreen display 204. These composed items may be transmitted through the communication subsystem 211 over the wireless network 101.

In the voice communication mode, the personal electronic device 201 provides telephony functions and operates as a typical cellular phone. The overall operation is similar to the data communication mode, except that the received signals would be output to the speaker 256 and signals for transmission would be generated by a transducer such as the microphone 258. The telephony functions are provided by a combination of software/firmware (i.e., a voice communication module) and hardware (i.e., the microphone 258, the speaker 256 and input devices). Alternative voice or audio I/O subsystems, such as a voice message recording subsystem, may also be implemented on the personal electronic device 201. Although voice or audio signal output is typically accomplished primarily through the speaker 256, the touchscreen display 204 may also be used to provide an indication of the identity of a calling party, duration of a voice call, or other voice call related information.

The processor 240 operates under stored program control and executes software modules 220 stored in memory such as persistent memory, for example, in the flash memory 244. As illustrated in FIG. 1, the software modules 220 include operating system software 222 and software applications 224, such as an action item management application 226. Functions and features provided by the action item management application 226 will be described in greater detail below with reference to FIGs. 2 to 7.

In at least some example embodiments, the operating system 222 may perform some or all of the functions of the action item management application 226. In other example embodiments, the functions or a portion of the functions of the action item management application 226 may be performed by one or more other applications. Further, while the action item management application 226 has been illustrated as a single block, the action item management application 226 may include a plurality of software modules. In at least some example embodiments, these software modules may be divided among multiple applications.

The personal electronic device 201 may include a range of additional software applications 224, including for example, a notepad application, a word processing application, an image viewing and/or editing application, a calendar application, an address book application, a mapping application, or a media player application (such as a video player and/or an audio player), or any combination thereof. Each of the software applications 224 may include layout information defining the placement of particular fields and graphic elements (e.g. text fields, input fields, icons, etc.) in the user interface (i.e. the touchscreen display 204) according to the application. In at least some example embodiments, the software applications 224 may include pre-determined gesture information defining functionalities associated with the pre-determined gestures received via the touchscreen display 204. For example, a software application 224 may determine a finger swiping movement (i.e. a pre-determined gesture) on the touchscreen display 204 as a scrolling function.

The software modules 220 or parts thereof may be temporarily loaded into volatile memory such as the RAM 246. The RAM 246 is used for storing runtime data variables and other types of data or information. Although specific functions are described for various types of memory, this is merely one example, and a different assignment of functions to types of memory could also be used.

### Graphical Representation of Action Items

In at least some embodiments, the personal electronic device 201 is configured to display a graphical representation of a plurality of action items 300 on a display 204 associated with the personal electronic device 201. More particularly, in at least some embodiments, the action item management application 226 may and/or another application 224 stored in memory, may contain processor-executable instructions which, when executed, cause the processor 240 of the personal electronic device 201 to display a graphical representation of a plurality of action items 300.

Referring first to FIG. 2, an example graphical representation 105 of a plurality of action items 300 is illustrated. The graphical representation 105 may be provided on a display 204 (FIG. 1) associated with the personal electronic device 201 (i.e. the graphical representation 105 is a display screen).

The graphical representation 105 includes a plurality of action item identifiers 110a, 110b, 110c, 110d, 110e associated with a plurality of action items 300. Different action item identifiers 110a, 110b, 110c, 110d, 110e are associated with different action items 300.

At least some of the action item identifiers 110a, 110b, 110c, 110d, 110e are located at positions of the display 204 which depend on the date information 301 and the importance information 302 for the action item 300 associated with the action item identifier 110a, 110b, 110c, 110d, 110e. For example, in the example embodiment illustrated, the horizontal position of the action item identifiers 110a, 110b, 110c, 110d, 110e depends on the date information 301 and the vertical position of the action item identifiers 110a, 110b, 110c, 110d, 110e depends on the importance information 302. That is, the horizontal (left to right) positions of the action item identifiers 110a, 110b, 110c, 110d, 110e are determined to chronologically represent deadlines associated with the action items. The left to right positioning of an action item identifier 110a, 110b, 110c, 110d, 110e represents the date information for the action item associated with that action item identifier. More particularly, in the embodiment illustrated, an action item identifier 110a, 110b, 110c, 110d, 110e for an action item 300 having a relatively earlier deadline is displayed to the left of an action item identifier for an action item having a relatively later deadline.

For example, in the illustrated graphical representation 105 of FIG. 2, a first action item identifier 110a and a second action item identifier 110b have the same horizontal position (e.g. they are located along a common vertical line extending from the top of the display to the bottom). The personal electronic device 201 is configured to position the first action item identifier 110a and the second action item identifier 110b at common horizontal positions since the action items 300 associated with these action item identifiers have common deadline.

In the illustrated graphical representation 105 of FIG. 2, the first action item identifier 110a and the second action item identifier 110b are both positioned to the left of a third action item identifier 110c. The third action item identifier 110c is positioned to the left of a fourth action item identifier 110d and the fourth action item identifier 110d is positioned to the left of a fifth action item identifier 110e. This positioning signifies that the action items 300 associated with the first action item identifier 110a and the second action item identifier 110b have a relatively earlier deadline than the deadline for the action item associated with the third action item identifier 110c and also that the action item 300 associated with the third action item identifier 110c has a deadline that is relatively earlier than the deadline for the action item 300 associated with the fourth action item identifier 110d. Similarly, the position signifies that the action item 300 associated with the fourth action item identifier 110d has a deadline that is relatively earlier than the deadline for the action item 300 associated with the fifth action item identifier 110e.

Accordingly, the graphical representation displays the action item identifiers 110a, 110b, 110c, 110d, 110e as a timeline which represents the order of deadlines associated with action items.

In the example embodiment illustrated, the vertical (top to bottom) positions of the action item identifiers 110a, 110b, 110c, 110d, 110e represent the level of importance of the action item 300. More particularly, in the example embodiment illustrated, the graphical representation 105 displays an action item identifier 110a, 110b, 110c, 110d, 110e for an action item 300 having a relatively higher level of importance at a position that is higher on the display than the position of an action item identifier for an action item 300 having a relatively lower level of importance.

Accordingly, the personal electronic device 201 may determine the relative levels of importance of a plurality of action items 300 from the importance information 302 and may display the action item identifiers for those action items at positions which depend on the relative levels of importance. More particularly, in the example shown, the vertical position of the action item identifiers represents the relative level of importance of the action items.

In the embodiment illustrated, the level of importance of an action item 300 is a ternary property. That is, the importance information 302 may specify three possible values for the level of importance of an action item 300 - a first value represents a low level of importance, a second value represents a neutral or medium level of importance and a third value represents a high level of importance.

It will be appreciated that the level of importance may be specified in other ways in other embodiments. For example, as noted previously, in some embodiments, the level of importance may be a binary property (i.e. it may have two possible values - a first representing a low level of importance and a second indicating a relatively high level of importance). By way of further example, in some embodiments, the level of importance may be specified on a scale of one to ten or one to one hundred.

In the example illustrated, the action items 300 associated with the first action item indicator 110a and the fifth action item indicator 110e have importance information 302 indicating that those action items 300 have a relatively high level of importance. In the example illustrated, the personal electronic device 201 identifies such important action items 300 (i.e. it identifies action items 300 having a relatively high level of importance) and displays action item identifiers for those action items 300 at positions that are relatively higher on the display 204 than the action item identifiers for less important action items 300.

In the example illustrated, the action item 300 associated with the fourth action item identifier 110d has a neutral or medium level of importance. In the example illustrated, the personal electronic device 201 identifies action items 300 having a neutral or medium level of importance and displays action item identifiers for those action items at a position that is relatively lower than action item identifiers for more important action items and relatively higher than action item identifiers for less important action items. In the example illustrated, the action item identifiers for action items having a neutral or medium level of importance are displayed midway between the action item identifiers for action items having a high level of importance and the action item identifiers for action items having a low level of importance.

In the example illustrated, the action items 300 associated with the second and third action item identifiers 110b, 110c have importance information 302 indicating that those action items 300 have a relatively low level of importance. In the example illustrated, the personal electronic device 201 identifies action items having a relatively low level of importance and displays action item identifiers for those action items at positions that are relatively lower on the display 204 than the action item identifiers for more important action items.

The graphical representation 105 includes indicia, such as one or more labels 121, 122, which identify the meaning of the positioning of the action item identifiers. That is, the labels 121, 122 identify the relationship between the positions of the action items identifiers and date information 301 and importance information 302. In the example embodiment illustrated, the labels include an importance label 121 and a date label 122. The importance label 121 is positioned along an importance line 125. The importance label 121 and the importance line 125 illustrate how importance information 302 is graphically represented in the graphical representation 105. Additional labels, such as "high", "low", and/or "neutral" may indicate levels of importance.

Similarly, a date label 122 (which is labelled "Due" in the example embodiment) and a date line 126 illustrate how date information 301 is graphically represented in the graphical representation 105. Additional labels, such as "today", "next week", and/or "next month" may provide greater precision for graphically representing the date information 301. That is, these additional labels allow a user to easily determine the deadline of an action item associated with a displayed action item identifier.

Two or more action items 300 may have date information 301 representing a common date and importance information 302 representing a common level of importance. Accordingly, multiple action items 300 may be represented at a common position of the graphical representation 105 and may, in at least some embodiments, be represented by a common action item identifier. By way of example, in the example illustrated, the first action item identifier 110a is associated with multiple action items 300. In at least some embodiments, an action item identifier may be configured by the personal electronic device 201 to represent the number of action items associated with the action item identifier. For example, in the embodiment illustrated, the size of the action item identifiers are selected by the personal electronic device 201 based on the number of action items which they are associated with. That is, the action item identifier is made larger if it is associated with more than one action item 300; the size of the action item identifier relates to the number of action items associated with that action item identifier.

Other methods of indicating the size of action item identifiers may be used in other embodiments. For example, in some embodiments, a numeral may be displayed on or near the action item identifier to indicate the number of action items associated with that action item identifier.

The graphical representation 105 of FIG. 2 may not display identifiers for all action items on a single display screen. For example, to avoid clutter of the graphical representation 105, the graphical representation 105 may only represent a predetermined number of action items or may only display identifiers for action items falling within a certain time period. The time period may be user selectable and example time periods may be: a week, two weeks, a month, etc. In some embodiments, the graphical representation 105 may be scrollable to allow other action items (i.e. action items not initially represented on the graphical representation 105) to be represented. That is, scrolling may allow other action item identifiers to be displayed on the display 204. In at least some embodiments, an inward pinch gesture may cause the graphical representation 105 to effectively zoom out and display a greater number of action items and/or a greater span of dates and an outward pinch gesture may cause the graphical representation 105 to effectively zoom in and display a fewer number of action items and/or a shorter span of dates.

In at least some embodiments, the graphical representation 105 may also permit scrolling to action items occurring in the past that have been completed. That is, a backward scroll input command may cause the graphical representation 105 to display action items occurring in the past.

Referring now to FIG. 3, an example of the graphical representation 105 of action items is displayed together with a hand 150. In the embodiment of FIG. 3, the personal electronic device 201 receives input selecting an action item identifier 110a. In the embodiment illustrated, such input is received via a touchscreen display 204. More particularly, the hand 150 (or another object such as a stylus) activates the action item identifier via touch. For example, the action item identifier may be selected by tapping the action item identifier. In response to receiving the input selecting the action item identifier, the action item associated with the selected action item identifier is opened. In the example embodiment illustrated, when the selected action item identifier is opened, data from the action item(s) associated with the selected action item identifier is displayed on the display 204. More particularly, an action item information overlay 130 is displayed on the graphical representation 105 described above with reference to FIG. 2.

In the example embodiment illustrated, the selected action item identifier 110a is associated with multiple action items 300. In this example, details of the multiple action items 300 are displayed in the action item information overlay 130. For example, a description of the action that is required by the action item 300 may be displayed.

In other embodiments (not illustrated), when an action item identifier is selected, the action item may not be opened as an overlay. That is, instead of displaying an action item information overlay 130 on top of the graphical representation 105, data associated with an action item may be displayed in another manner. For example, the graphical representation 105 of the action items may be removed from the display 204 and a further display screen may be displayed which contains details of the action item. This further display screen may, in at least some embodiments, occupy the entirety of the display 204.

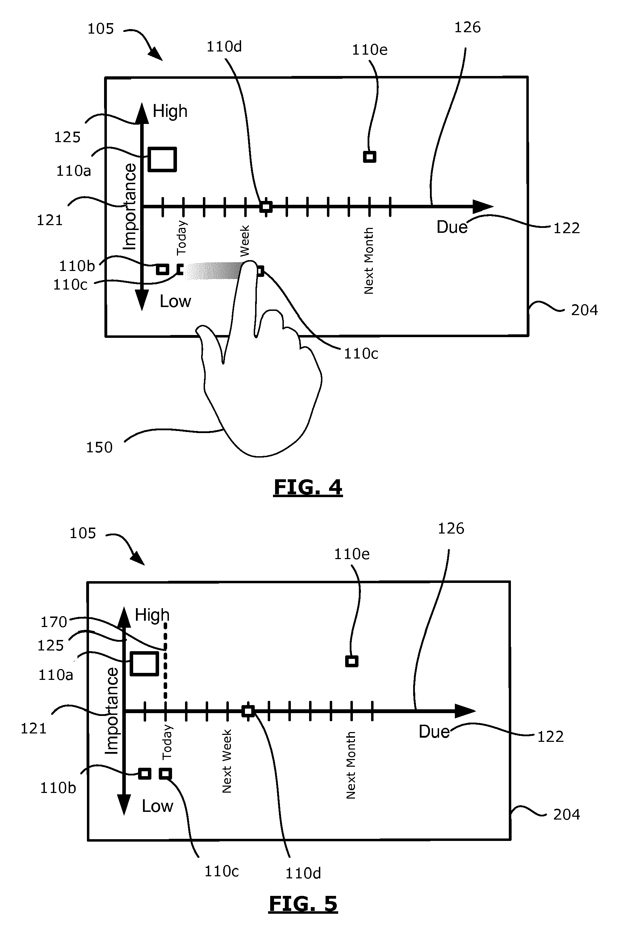

In at least some embodiments, action item identifiers may be movable on the display 204. One such embodiment is illustrated in FIG. 4. In the embodiment illustrated in FIG. 4, the graphical representation 105 of action items 300 described with reference to FIG. 2 is displayed together with a hand 150. The hand 150 (or another object such as a stylus) interacts with a touchscreen display 204. More particularly, in the example illustrated, a finger of the hand 150 interacts with an action item identifier (which, in the example illustrated, is the third action item identifier). This interaction allows the personal electronic device 201 to receive input moving the action item identifier to another position on the display 204. In the example illustrated, the action item identifier 110c is moved to the right. That is, a dragging gesture is applied to the action item identifier 110c beginning at the action item identifier's position and dragging to the right.

In response to receiving the input moving the action item identifier to another position on the display 204, the personal electronic device 201 modifies one or both of the date information 301 or the importance information 302 based on the position to which the action item identifier was moved. In the example illustrated, a horizontal movement causes the date information 301 to be modified and a vertical movement causes the importance information 302 to be modified. When the movement has both a horizontal component and a vertical component, both the date information 301 and the importance information 302 may be modified. In the example illustrated in FIG. 4, the action item identifier 110c is initially due "today" and is moved to a position associated with a deadline of "next week". As a result, the date information 301 may be modified so that the action item is due next week instead oftoday.

Thus, the graphical representation 105 may allow the date information 301 and the importance information 302 to be easily modified. A single input may modify both the date information 301 and the importance information 302.

Referring now to FIG. 5, in at least some embodiments, an overdue action item identifier 170 may be displayed together with the graphical representation 105 of action items 300 described herein. The overdue action item identifier 170 may identify action items having deadlines that have expired. In the example illustrated, the overdue action item identifier 170 is a line placed at the current date (i.e. a line located at "today"). Thus, in the embodiment illustrated, the overdue action item identifier 170 is a current date identifier. The current date identifier identifies the current date and separates action item identifiers for overdue action items (in the example embodiment, the first and second action item identifiers 110a, 110b represent overdue action items 300) from action item identifiers for action items not yet due.

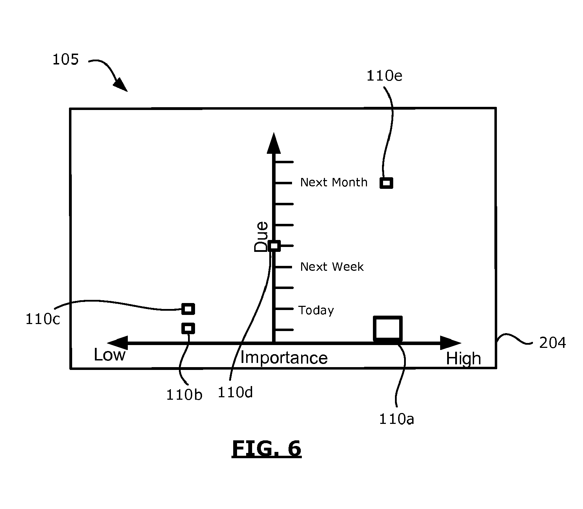

While the embodiments described above generally described associating a horizontal (left to right) positioning of an action item identifier with a deadline and a vertical positioning (top to bottom) positioning of an action item identifier with a level of importance, in other embodiments, these roles may be reversed. That is, as illustrated in FIG. 6, in some embodiments, the horizontal positioning of action item identifiers may represent the level of importance of action items and the vertical positioning of action item identifiers may represent the deadline. More particularly, the vertical position of an action item identifier may be determined based on the date information 301 and the horizontal position may be determined based on the importance information 302.

Furthermore, while the embodiments described have illustrated a display 204 arranged in a landscape orientation (i.e. the width is longer than the height), in other embodiments, the display 204 may be arranged in a portrait orientation (i.e. the height may be longer than the width).

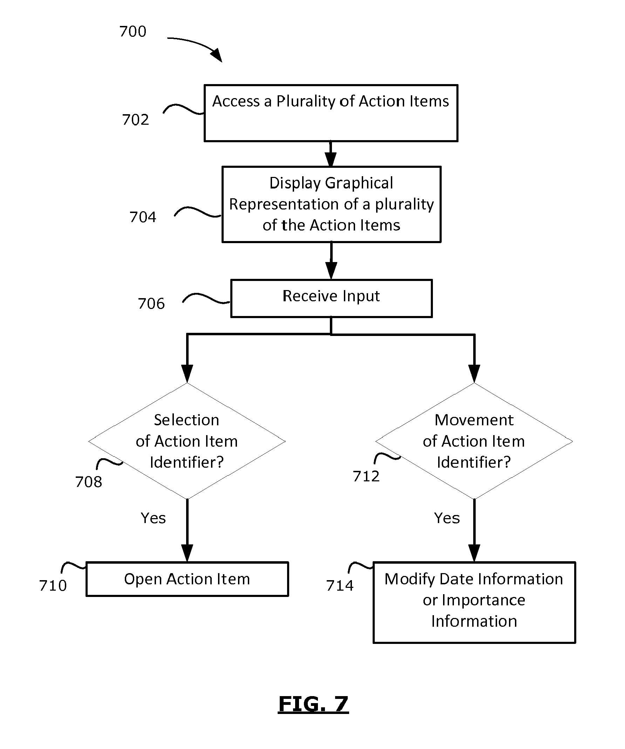

Referring now to FIG. 7, an example method 700 for displaying a graphical representation of action items is illustrated. The method 700 may, in at least some embodiments, be performed by the action item management application 226. More particularly, the action item management application 226 (and/or another application 224 stored in memory) may contain processor-executable instructions which, when executed, cause the processor 240 of the personal electronic device 201 to perform the methods described below. The processor-readable instructions may be configured to cause the processor 240 to generate one or more screens having the features described below.

At 702, the personal electronic device 201 accesses a plurality of action items 300. The action items 300 may be of the type described above. More particularly, the action items may represent actions and at least a subset of the action items may have associated date information and importance information. The date information defines a deadline for the action and the importance information defines a level of importance of the action. In at least some embodiments, at 702, the action items 300 may be accessed from memory of the personal electronic device 201.

The action items 300 may, in at least some embodiments, have been obtained via an input interface 206 associated with the personal electronic device 201. For example, the personal electronic device 201 may receive input via a keyboard or touchscreen display. After action items 300 are input, they may be stored in memory and may then be accessed at 702.

At 704, a graphical representation 105 of the plurality of action items is displayed on the display of the personal electronic device 201. The graphical representation 105 of action items may be of a type described above. For example, in some embodiments, at 704, the personal electronic device 201 determines a horizontal position of an action item identifier based on date information for the action item associated with that action item identifier. Similarly, a vertical position of an action item identifier may be determined based on importance information for the action item associated with the action item identifier. The graphical representation 105 of the action items may display the action item identifiers based on these determined positions.

As noted above, in other embodiments (such as the embodiment of FIG. 6), the personal electronic device 201 determines a vertical position of an action item identifier based on date information for the action item associated with that action item identifier. Similarly, a horizontal position of an action item identifier may be determined based on importance information for the action item associated with the action item identifier. The graphical representation 105 of the action items may display the action item identifiers based on these determined positions.

At 706, input may be received at the personal electronic device 201 via an input interface 206. The input interface 206 may take a variety of forms. In at least some embodiments, the input may be received via a touchscreen display 204.

At 708, the personal electronic device 201 determines if the input is a selection of an action item identifier (e.g. this may be a tapping gesture applied to the action item identifier). If so, at 710, the personal electronic device 201 may open the action item in the manner described above with reference to FIG. 3.

At 712, the personal electronic device 201 determines if the input is a movement of the action item identifier 712. That is, the personal electronic device determines if input has been received moving the action item identifier to another position on the display. If so, at 714, the personal electronic device 201 modifies the date information and/or importance information for the action item associated with the moved action item identifier. More specifically, one or both of the date information or the importance information are modified based on the position to which the action item identifier was moved. This feature is described in greater detail with reference to FIG. 4.

The techniques described herein may be applied to other types of records having date information associated therewith, instead of or in addition to action items. For example, in at least some embodiments, the techniques described above may be used to provide a graphical representation of a plurality of meeting or appointment records. The meeting or appointment records may be records of meetings or appointments to occur in the future and may have importance information and date information associated therewith. Similarly, in at least some embodiments, the techniques described above may be used to provide a graphical representation of emails, such as received and/or sent emails. For example, the date the email was sent or received could form the date information described above and an urgent or important flag could form the importance information. Graphical representations such as those described above could then be generated based on this date and importance information.

While the present application is primarily described in terms of methods, a person of ordinary skill in the art will understand that the present application is also directed to various apparatus such as a personal electronic device 201 including a mobile communications device. The personal electronic device 201 includes components for performing at least some of the aspects and features of the described methods, which may be by way of hardware components (such as the memory 244 and/or the processor 240), software or any combination of the two, or in any other manner. Moreover, an article of manufacture for use with the apparatus, such as a pre-recorded storage device or other similar computer readable storage medium including program instructions recorded thereon, or a computer data signal carrying computer readable program instructions may direct an apparatus to facilitate the practice of the described methods. For example, a computer readable storage medium may include computer executable instructions for performing one or more of the methods described herein. It is understood that such apparatus and articles of manufacture also come within the scope of the present application.

The term "computer readable medium" or "computer readable storage medium" as used herein means any medium which can store instructions for use by or execution by a computer or other computing device including but not limited to, a portable computer diskette, a hard disk drive (HDD), a random access memory (RAM), a read-only memory (ROM), an erasable programmable-read-only memory (EPROM) or flash memory, an optical disc such as a Compact Disc (CD), Digital Versatile Disc (DVD) or Blu-ray™ Disc, and a solid state storage device (e.g., NAND flash or synchronous dynamic RAM (SDRAM)).

Example embodiments of the present application are not limited to any particular operating system, system architecture, mobile device architecture, server architecture, or computer programming language.

The various example embodiments presented above are merely examples. Variations of the innovations described herein will be apparent to persons of ordinary skill in the art, such variations being within the intended scope of the present application. In particular, features from one or more of the above-described example embodiments may be selected to create alternative example embodiments including a sub-combination of features which may not be explicitly described above. In addition, features from one or more of the above-described example embodiments may be selected and combined to create alternative example embodiments including a combination of features which may not be explicitly described above. Features suitable for such combinations and sub-combinations would be readily apparent to persons skilled in the art upon review of the present application as a whole. The subject matter described herein and in the recited claims intends to cover and embrace all suitable changes in technology.

## Claims

1. A method implemented by a processor (240) of a personal electronic device (201), the method comprising:
accessing a plurality of action items (300), at least a subset of the action items having associated date information (301) and importance information (302); and
displaying, on a display (204) of the personal electronic device (201), a graphical representation (105) of the plurality of the action items (300), the graphical representation (105) including an action item identifier (110a, 110b, 110c, 110d, 110e) for each of the plurality of action items (300), at least a subset of the action item identifiers being displayed at positions determined at least in part by the date information and the importance information for the action items associated with the action item identifiers.

2. The method of claim 1, wherein displaying a graphical representation of a plurality of the action items comprises:
determining a horizontal position of an action item identifier (110a, 110b, 110c, 110d, 110e) based on the date information; and
determining a vertical position of the action item identifier (110a, 110b, 110c, 110d, 110e) based on the importance information.

3. The method of claim 2, wherein the horizontal positions of the action item identifiers (110a, 110b, 110c, 110d, 110e) are determined to chronologically represent deadlines associated with the action items.

4. The method of claim 3, wherein the graphical representation (105) of the action items displays action item identifiers (110a, 110b, 110c, 110d, 110e) as a timeline.

5. The method of any one of claims 2 to 4, wherein the graphical representation (105) displays an action item identifier (110a, 110b, 110c, 110d, 110e) for an action item (300) having a relatively earlier deadline to the left of an action item identifier (110a, 110b, 110c, 110d, 110e) for an action item (300) having a relatively later deadline.

6. The method of any one of claims 2 to 5, wherein the graphical representation (105) displays an action item identifier (110a, 110b, 110c, 110d, 110e) for an action item (300) having a relatively higher level of importance at a position that is higher on the display than the position of an action item identifier for an action item having a relatively lower level of importance.

7. The method of any one of claims 1 to 6, further comprising:
displaying an overdue action item identifier (170) together with the graphical representation (105) of the action items, the overdue action item identifier (170) identifying action items having deadlines that have expired.

8. The method of claim 7, wherein the overdue action item identifier (170) is a current date identifier, the current date identifier identifying the current date and separating action item identifiers for overdue action items from action item identifiers for action items not yet due.

9. The method of any one of claims 1 to 8, wherein the action item identifiers (110a, 110b, 110c, 110d, 110e) are selectable, the method further comprising:
receiving input selecting an action item identifier (110a, 110b, 110c, 110d, 110e);and
in response to receiving the input selecting the action item identifier (110a, 110b, 110c, 110d, 110e), opening the action item (300) associated with the selected action item identifier.

10. The method of any one claims 1 to 9, wherein the action item identifiers (110a, 110b, 110c, 110d, 110e) are movable, the method further comprising:
receiving input moving the action item identifier to another position on the display; and
in response to receiving the input moving the action item identifier to another position on the display, modifying one or both of the date information or the importance information for the action item associated with the moved action item identifier based on the position to which the action item identifier was moved.

11. The method of claim 1, wherein displaying a graphical representation (105) of a plurality of the action items (300) comprises:
determining a vertical position of an action item identifier based on the date information; and
determining a horizontal position of the action item identifier based on the importance information.

12. The method of claim 11, wherein the vertical positions of the action item identifiers (110a, 110b, 110c, 110d, 110e) are determined to chronologically represent deadlines associated with the action items.

13. A personal electronic device comprising:
a display (204);
a memory; and
a processor (240) coupled with the display (204) and the memory, the processor (240) being configured to perform the method of any one of claims 1 to 12.

14. The personal electronic device of claim 13, wherein the personal electronic device is a smartphone.

15. A computer readable storage medium comprising computer executable instructions which, when executed, cause a processor to perform the method of any one of claims 1 to 12.
